# EUROPÄISCHE PATENTSCHRIFT

(11) **EP 3 877 234 B1**
(45) Veröffentlichungstag und Bekanntmachung des Hinweises auf die Patenterteilung: **24.08.2022**
(21) Anmeldenummer: 19795527.1
(22) Anmeldetag: 25.10.2019
(51) Int. Cl.: B61D 17/06, B61D 17/02

(54) **BUGKLAPPENANORDNUNG**
FRONT FLAP ASSEMBLY
ENSEMBLE PORTE DE FACE AVANT

(30) Priorität: 06.11.2018 DE 102018127618
(43) Veröffentlichungstag der Anmeldung: 15.09.2021
(73) Patentinhaber: Voith Patent GmbH, 89522 Heidenheim (DE)
(72) Erfinder: AHRENS, Michael, 38300 Wolfenbüttel (DE)
(74) Vertreter: Voith Patent GmbH - Patentabteilung
(86) Internationale Anmeldenummer: PCT/EP2019/079192
(87) Internationale Veröffentlichungsnummer: WO 2020/094426

(56) Entgegenhaltungen:
- EP-A1- 2 394 879
- WO-A1-2007/073273
- CN-A- 107 792 101
- CN-B- 104 742 922
- DE-U1-202014 001 500
- US-A1- 2013 042 788

## Beschreibung

Die vorliegende Erfindung betrifft eine Bugklappenanordnung für ein spurgebundenes Fahrzeug mit wenigstens einer Bugklappe, die verschiebbar zwischen einer eingefahrenen Position und einer ausgefahrenen Position aufgehängt ist.

Gattungsgemäße Bugklappenanordnungen, beispielsweise für ein Schienenfahrzeug, wie sie die vorliegende Erfindung insbesondere betrifft, sind an der Stirnseite des Schienenfahrzeugs als Schutzverkleidung vorgesehen, um eine Kupplung, insbesondere den Kupplungskopf, vor Witterungseinflüssen wie Schnee, Vereisung, Feuchtigkeit und Schmutz zu schützen, solange die Kupplung nicht zum Einsatz kommt und sich demgemäß in einem entkuppelten Zustand befindet. Wenn hingegen die Kupplung, beispielsweise Elektrokupplung und/oder mechanische Zugkupplung, gekuppelt werden soll, so muss die Schutzverkleidung durch Verlagern wenigstens einer Bugklappe in der Bugklappenanordnung geöffnet werden, um die Kupplung freizugeben.

Das Öffnen der Schutzverkleidung beziehungsweise das Verlagern der Bugklappen kann prinzipiell durch Verschwenken und/oder durch Verschieben der Bugklappen erfolgen. Die vorliegende Erfindung betrifft eine Bugklappenanordnung mit wenigstens einer verschiebbaren, insbesondere translatorisch verschiebbaren, Bugklappe, jedoch ist nicht ausgeschlossen, dass zusätzlich wenigstens eine verschwenkbare Bugklappe vorgesehen ist, wie beispielsweise in DE 20 2012 101 220 U1 offenbart wird. Hinter der Schutzverkleidung können zusätzlich Verformungssysteme vorgesehen sein, die bei einem Unfall Energie verzehren.

Bei solchen ein- und ausfahrbaren Bugklappen kann es in den Führungen von Tragelemente, die an der Bugklappe angeschlossen sind und entlang eines Verfahrweges verfahren werden können, zu einem Verklemmen kommen, wodurch eine Schrägstellung der Bugklappe bewirkt wird, welche die Verklemmkraft bis zu einem Blockieren erhöhen kann. Insbesondere bei Ausführungen, bei welchem die Führung einer Bugklappe über zwei oder mehrere Führungen erfolgt, können Abweichungen bei der Krafteinleitung zu einem Verkanten analog wie bei einer Schublade führen. Dieser Effekt wird im Wesentlichen durch die jeweils vorliegenden Reibungsverhältnisse und die geometrischen Abmessungen bestimmt. Beide Randbedingungen sind bei Schienenfahrzeugen im Bereich der Bugklappen nur bedingt gezielt änderbar, da der Bauraum an der Fahrzeugspitze weitgehend durch die Verformungssysteme und die automatische Kupplung beansprucht wird.

Das Dokument EP 2 394 879 A1 beschreibt eine Bugklappenanordnung für ein spurgebundenes Fahrzeug; mit wenigstens einer Bugklappe, die zwischen einer eingefahrenen Position und einer ausgefahrenen Position verschiebbar aufgehängt ist; mit wenigstens zwei die Bugklappe haltenden Führungen, die jeweils ein an der Bugklappe angeschlossenes Tragelement ein-und ausfahrbar entlang jeweils eines Verfahrweges führen und die quer zu einer Verschieberichtung der Bugklappe mit Abstand zueinander positioniert sind; wobei eine Synchronisationseinrichtung vorgesehen ist, welche derart an den Tragelementen und/oder der Bugklappe angreift, dass die Verfahrwege synchronisiert werden.

Der vorliegenden Erfindung liegt die Aufgabe zugrunde, eine Bugklappenanordnung für ein spurgebundenes Fahrzeug anzugeben, bei welcher das genannte Problem zumindest vermindert und vorteilhaft vermieden wird und ein Verklemmen der Bugklappe, das insbesondere beim Einfahren droht, ausgeschlossen wird.

Die erfindungsgemäße Aufgabe wird durch eine Bugklappenanordnung mit den Merkmalen von Anspruch 1 gelöst. In den abhängigen Ansprüchen werden besonders vorteilhafte und zweckmäßige Ausgestaltungen der Erfindung angegeben.

Eine erfindungsgemäße Bugklappenanordnung für ein spurgebundenes Fahrzeug, insbesondere Schienenfahrzeug, weist wenigstens eine Bugklappe auf, die verschiebbar, insbesondere translatorisch verschiebbar, zwischen einer eingefahrenen Position und einer ausgefahrenen Position aufgehängt ist, beispielsweise an einem Rahmenteil des Schienenfahrzeugs. Statt einer (rein) translatorischen Verschiebung kann auch eine Verschiebung entlang einer zumindest teilweise gekrümmten Bahn erfolgen.

Es sind wenigstens zwei die Bugklappe haltende Führungen vorgesehen, die jeweils ein an der Bugklappe angeschlossenes Tragelement ein- und ausfahrbar, insbesondere rein translatorisch ein- und ausfahrbar entlang jeweils eines Verfahrweges oder die jeweils ein an der Bugklappe angeschlossenes Tragelement ein- und ausfahrbar entlang eines gekrümmten Verfahrweges verschiebbar führen und die quer zu einer Verschieberichtung der Bugklappe mit Abstand zueinander positioniert sind. Bei einer Verschiebung der Bugklappe entlang eines gekrümmten Verfahrweges muss der Abstand entsprechend nicht senkrecht zu dem gesamten Verfahrweg beziehungsweise der Verschieberichtung definiert sein, sondern kann sich auch nur auf einen Abschnitt des Verfahrweges beziehen oder schräg auf dem Verfahrweg beziehungsweise der Verschieberichtung stehen.

Unter einem gekrümmt ausgebildeten Verfahrweg ist insbesondere ein Verfahrweg zu verstehen, welcher durch einen Radius oder eine Mehrzahl unterschiedlicher Radien charakterisiert ist.

Erfindungsgemäß ist eine Synchronisationseinrichtung vorgesehen, welche derart an den Tragelementen und/oder der Bugklappe angreift, dass die Verfahrwege synchronisiert werden.

Durch die Synchronisation der beiden Verfahrwege mittels der Synchronisationseinrichtung wird eine Schiefstellung der Bugklappe beziehungsweise der Tragelemente in den Führungen vermieden. Die Synchronisationseinrichtung kann bauraumsparend ausgeführt werden und sie gleicht, wenn es insbesondere während des Einfahrens der Bugklappe zu einem ungleichen Verfahrweg der beiden Tragelemente kommt, diese Ungleichheit durch einen Eingriff aus, indem sie insbesondere das Tragelement aktiv bewegt, welches den vergleichsweise kürzeren Verfahrweg aufweist.

Bevorzugt weist die Synchronisationseinrichtung je Führung wenigstens ein Zugelement auf, das einerseits an einem Zuganschluss an einem der Tragelemente oder im Bereich des jeweiligen Tragelementes an der Bugklappe angeschlossen ist und andererseits zumindest mittelbar derart an jeweils dem anderen Tragelement angeschlossen ist, dass es beim Einfahren des jeweils anderen Tragelementes eine die Verfahrwege synchronisierende Zugkraft auf den Zuganschluss ausübt.

Die Zugelemente sind beispielsweise biegeschlaff ausgeführt, insbesondere als Riemen, Drähte, Seile, Bänder oder dergleichen.

Gemäß einer Ausführungsform der Erfindung sind die Zugelemente als Bowdenzüge ausgeführt.

Gemäß einer weiteren Ausführungsform sind die Zugelemente als Riemen, insbesondere als Zahnriemen ausgeführt, die zu ihrer Synchronisierung jeweils in einem mechanischen Eingriff mit einer gemeinsamen Welle stehen. Somit kann die Welle von einem der Zahnriemen angetrieben werden, nämlich von dem Zahnriemen des vergleichsweise schneller verfahrenden Tragelementes, und den anderen Zahnriemen antreiben, nämlich des vergleichsweise langsamer verfahrenden Tragelementes, um das langsamer verfahrende Tragelement zu beschleunigen.

Insbesondere erstreckt sich die Welle quer zur Verschieberichtung der Bugklappe und trägt je Zahnriemen ein Zahnrad oder bildet ein solches aus, mit welchem jeweils ein Zahnriemen in kämmendem Eingriff steht.

Die Führungen können beispielsweise als Gleitlager ausgeführt sein. Prinzipiell sind jedoch auch Wälzlager, wie Rollenlager oder Kugellager, denkbar.

Gemäß einer Ausführungsform der Erfindung sind die Tragelemente als Stangen ausgeführt, welche in ihrer Umfangsrichtung von den Führungen teilweise oder vollständig umschlossen werden.

Gemäß einer Ausführungsform der Erfindung ist die wenigstens eine Bugklappe manuell verschiebbar.

Zusätzlich oder alternativ ist gemäß einer Ausführungsform der Erfindung wenigstens ein Aktuator zum Verschieben der Bugklappe vorgesehen. Ein solcher Aktuator kann beispielsweise zugleich eine der Führungen und eines der Tragelemente ausbilden. Beispielsweise ist der Aktuator als hydraulischer Teleskopzylinder ausgeführt. Ein anderes Ausführungsbeispiel sieht einen Spindeltrieb als Aktuator vor. Der Aktuator kann auch zusätzlich zu den jeweiligen Führungen und Tragelementen vorgesehen sein kann.

Eine erfindungsgemäße Bugklappenanordnung kann mehrere entsprechende Bugklappen mit jeweils einer entsprechenden Synchronisationseinrichtung der dargestellten Art aufweisen.

Gemäß einer Ausführungsform der Erfindung weist die Bugklappenanordnung neben der wenigstens einen insbesondere translatorisch verschiebbaren Bugklappe auch eine oder mehrere verschwenkbare Bugklappen auf.

Die Erfindung soll nachfolgend anhand von Ausführungsbeispielen und den Figuren exemplarisch beschrieben werden.

Es zeigen:
- Figur 1: eine perspektivische Ansicht der Stirnseite eines Schienenfahrzeugs mit einer erfindungsgemäßen Bugklappenanordnung;
- Figur 2: die Bugklappenanordnung aus der Figur 1 mit Tragelementen und Führungen;
- Figur 3: eine schematische Darstellung einer Ausführungsform einer erfindungsgemäßen Bugklappenanordnung;
- Figur 4: ein weiteres Ausführungsbeispiel in einer schematischen Darstellung einer erfindungsgemäßen Bugklappenanordnung.

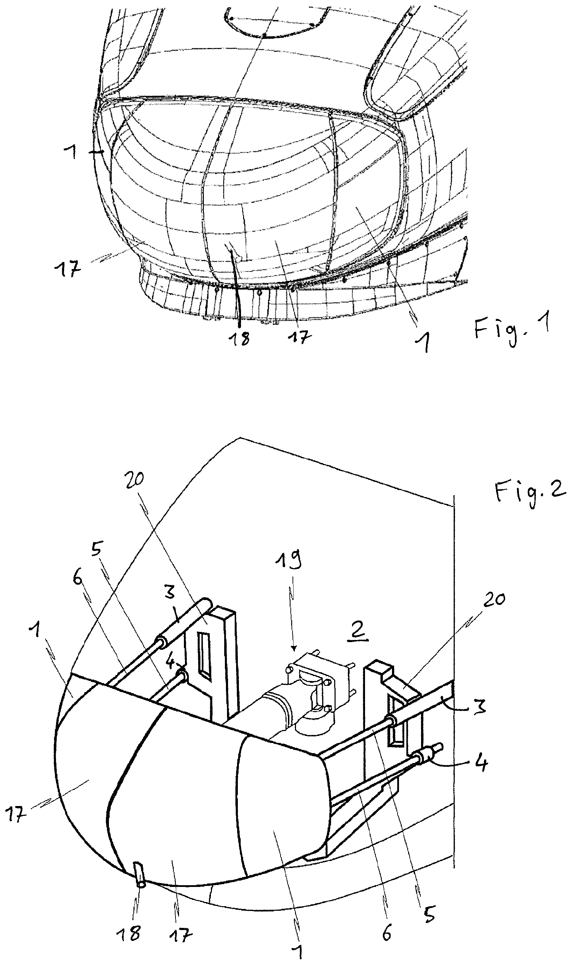

In der Figur 1 ist das stirnseitige Ende eines Schienenfahrzeugs gezeigt, dessen Kupplungskopf und gegebenenfalls Verformungsstrukturen durch eine Schutzverkleidung verschlossen werden. Die Schutzverkleidung umfasst eine Bugklappenanordnung mit verfahrbaren Bugklappen, hier mit zwei translatorisch verschiebbaren Bugklappen 1 und mit zwei verschwenkbaren Bugklappen 17. Die translatorisch verschiebbaren Bugklappen 1 sind jeweils in einem seitlichen Bereich angeordnet und die verschwenkbaren Bugklappen 17 sind in einem vorderen Bereich angeordnet. Die Erfindung ist jedoch nicht auf eine solche rein translatorische Verschiebbarkeit beschränkt.

Im gezeigten Ausführungsbeispiel ist eine Notentriegelung 18 vorgesehen, mit welcher die Bugklappen 1, 17 derart entriegelbar sind, dass sie von Hand bewegt werden können.

Aus der Darstellung in der Figur 2 erkennt man, dass die Bugklappenanordnung eine Kupplung 19 abdeckt. Ferner erkennt man den Anschluss der Bugklappen 1 an den Rahmen beziehungsweise Rahmenteile 20 des Schienenfahrzeugs.

Im Einzelnen weist zumindest jede translatorisch zwischen einer eingefahrenen Position und einer ausgefahrenen Position verschiebbar aufgehängte Bugklappe 1 wenigstens zwei die Bugklappe 1 haltende Führungen 3, 4 auf. Hier sind die Führungen 3, 4 im Wesentlichen horizontal übereinander positioniert, sie könnten jedoch grundsätzlich auch horizontal nebeneinander positioniert sein.

Jede Führung 3, 4 umschließt ein an der Bugklappe 1 angeschlossenes Tragelement 5, 6, hier in Form jeweils einer Stange, die von den Führungen 3, 4 nach Art eines Gleitlagers umschlossen wird. Wenn zum Beispiel die Stangen gekrümmt ausgeführt werden, kann eine nicht (rein) translatorische Verschiebung erreicht werden.

Jeweils eine der beiden Führung-Tragelement-Kombinationen kann beispielsweise als Aktuator ausgeführt sein, um das Verschieben der Bugklappe 1 zu bewirken. Alternativ kann auch ein zusätzlicher Aktuator (nicht dargestellt) an der Bugklappe 1 angeschlossen sein.

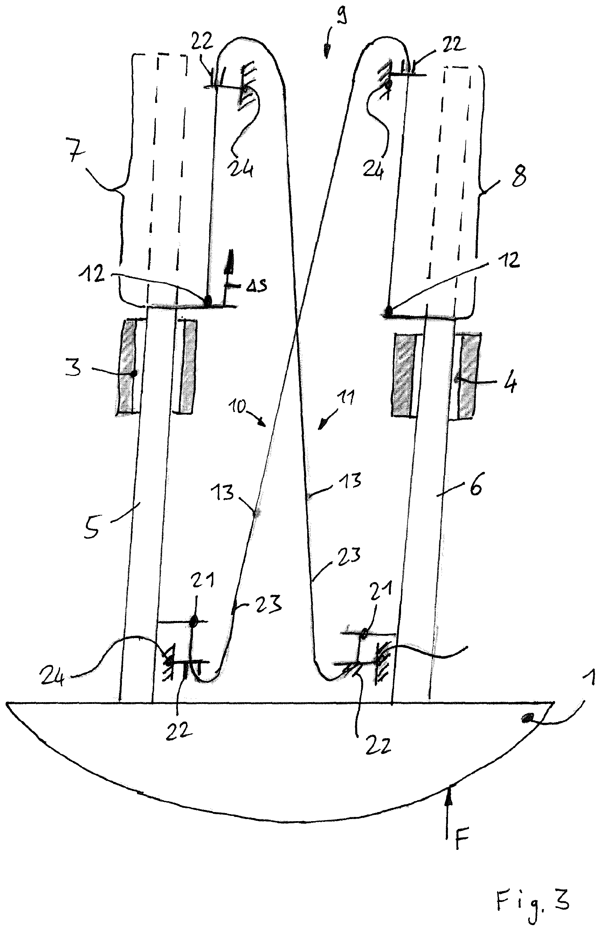

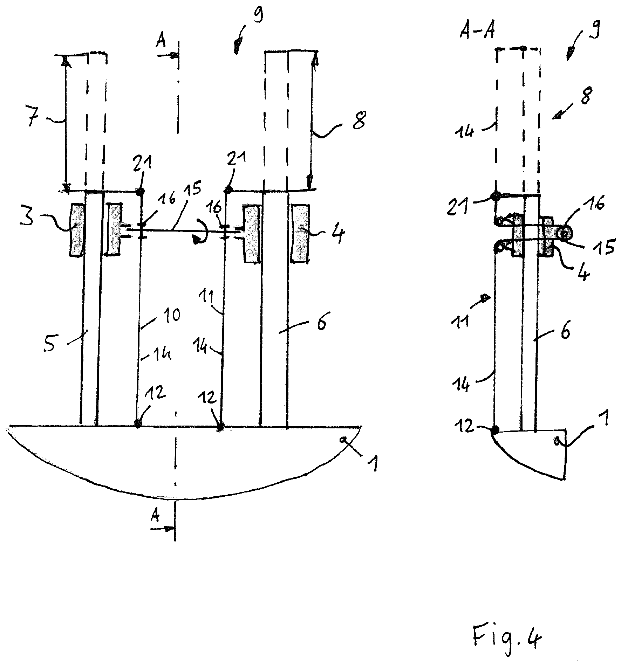

Um nun ein Verklemmen der Bugklappe 1 beziehungsweise von dessen Tragelementen 5, 6 in den Führungen 3, 4 durch eine Schrägstellung der Bugklappe 1 zu vermeiden, ist eine Synchronisationseinrichtung 9 vorgesehen, wie sie exemplarisch in den Figuren 3 und 4 dargestellt ist. Die Synchronisationseinrichtung 9 nimmt dabei äußerst wenig Platz in dem in der Figur 2 im Bereich hinter den Bugklappen 1 vorgesehenen Raum 2 ein, in dem die Kupplung 19 angeordnet ist und der durch die Bugklappen 1, 17 verschlossen werden kann.

Bei der Ausgestaltung gemäß der Figur 3 umfasst die Synchronisationseinrichtung 9 zwei Bowdenzüge 13, die jeweils ein Zugelement 10, 11 ausbilden, das mit einem Ende an einem Zuganschluss 12 des einen Tragelementes 5, 6 angeschlossen ist und mit dem anderen Ende am jeweils anderen Tragelement 6, 5 angeschlossen ist, hier an einem Betätigungsanschluss 21. Zwischen dem Zuganschluss 12 und dem Betätigungsanschluss 21 weist der Bowdenzug 13 eine nur angedeutete Hülse 22 auf, die einen inneren Draht 23 führt. Die Hülse 22 ist entsprechend an ortsfesten Lagern 24 gelagert.

Wenn eines der Tragelemente 5, 6, beispielsweise das Tragelement 5, aufgrund einer Angriffskraft F entlang seines Verfahrweges 7 verfahren wird, so soll das andere Tragelement 6 entsprechend mit einem gleich großen Verfahrweg 8 verfahren werden, um eine Schrägstellung und die Gefahr des Verklemmens der Bugklappe 1 zu vermeiden. Wenn jedoch das Tragelement 5 schneller einfährt, als das Tragelement 6, beispielsweise weil das Tragelement 6 einer vergleichsweise größeren Reibung in seiner Führung 4 unterliegt, so stellt sich eine unerwünschte Wegdifferenz Δs zwischen den Verfahrwegen 7 und 8 ein. Um dies auszugleichen bewirkt die Synchronisationseinrichtung 9 ein Ziehen am Tragelement 6, sodass dies dem Tragelement 5 sozusagen durch Überwinden der höheren Reibkraft "hinterher eilt".

Im Einzelnen greift das Tragelement 5 über seinen Betätigungsanschluss 21 am Zugelement 10, hier dem Draht 23 des Bowdenzugs 13 an und zieht damit über den Zuganschluss 12 am Tragelement 6 das Tragelement hinter sich her. Umgekehrt, wenn das Tragelement 6 schneller einfahren sollte als das Tragelement 5, so zieht das Tragelement 6 über den Betätigungsanschluss 21 des Zugelementes 11 und den Zuganschluss 12 am Tragelement 5 das Tragelement 5 hinter sich her.

Bei der Ausgestaltung gemäß der Figur 4, welche schematisch eine Draufsicht und eine Seitenansicht zeigt, umfasst die Synchronisationseinrichtung 9 zwei Zahnriemen 14 als Zugelemente 10, 11, die jeweils mit einem Zahnrad 16, das drehfest auf der Welle 15 angeordnet ist, kämmen.

Wenn eines der beiden Tragelemente 5, 6 entlang seines Verfahrweges 7, 8 verschoben wird, so zieht es über den Betätigungsanschluss 21 an dem ihm zugeordneten Zahnriemen 14, wodurch das entsprechende Zahnrad 16 und mit diesem die Welle 15 und das andere Zahnrad 16 in Umlauf versetzt wird. Das andere Zahnrad 16 wiederum treibt den anderen Zahnriemen an, der über den Zuganschluss 12 am anderen Tragelement 5, 6 zieht, sodass die Verfahrwege 7, 8 synchronisiert werden.

### Bezugszeichen

- 1: Bugklappe
- 2: Raum
- 3,4: Führung
- 5,6: Tragelement
- 7,8: Verfahrweg
- 9: Synchronisationseinrichtung
- 10, 11: Zugelement
- 12: Zuganschluss
- 13: Bowdenzug
- 14: Zahnriemen
- 15: Welle
- 16: Zahnrad
- 17: Bugklappe
- 18: Notentriegelung
- 19: Kupplung
- 20: Rahmenteil
- 21: Betätigungsanschluss
- 22: Hülse
- 23: Draht
- 24: Lager
- F: Kraft
- Δs: Wegdifferenz

## Patentansprüche

1. Bugklappenanordnung für ein spurgebundenes Fahrzeug;
mit wenigstens einer Bugklappe (1), die zwischen einer eingefahrenen Position und einer ausgefahrenen Position verschiebbar aufgehängt ist;
mit wenigstens zwei die Bugklappe (1) haltenden Führungen (3, 4), die jeweils ein an der Bugklappe (1) angeschlossenes Tragelement (5, 6) ein-und ausfahrbar entlang jeweils eines Verfahrweges (7, 8) führen und die quer zu einer Verschieberichtung der Bugklappe (1) mit Abstand zueinander positioniert sind;
wobei eine Synchronisationseinrichtung (9) vorgesehen ist, welche derart an den Tragelementen (5, 6) und/oder der Bugklappe (1) angreift, dass die Verfahrwege (7, 8) synchronisiert werden, **dadurch gekennzeichnet, dass** die Synchronisationseinrichtung (9) je Führung (3, 4) wenigstens ein Zugelement (10, 11) aufweist, das einerseits an einem Zuganschluss (12) an einem Tragelement (5, 6) oder im Bereich des jeweiligen Tragelementes (5, 6) an der Bugklappe (1) angeschlossen ist und andererseits zumindest mittelbar derart an jeweils dem anderen Tragelement (5, 6) angeschlossen ist, dass es beim Einfahren des jeweils anderen Tragelementes (5, 6) eine die Verfahrwege (7, 8) synchronisierende Zugkraft auf den Zuganschluss (12) ausübt.

2. Bugklappenanordnung gemäß Anspruch 1, **dadurch gekennzeichnet, dass** die Bugklappe (1) zwischen der eingefahrenen Position und der ausgefahrenen Position rein translatorisch verschiebbar aufgehängt ist und die Führungen (3, 4) jeweils das an der Bugklappe (1) angeschlossene Tragelement (5, 6) translatorisch ein- und ausfahrbar entlang jeweils des jeweils durch die Führungen beschreibbaren Verfahrweges (7, 8) führen.

3. Bugklappenanordnung gemäß Anspruch 1, **dadurch gekennzeichnet, dass** die Bugklappe (1) zwischen der eingefahrenen Position und der ausgefahrenen Position entlang eines zumindest teilweise gekrümmten Verfahrweges verschiebbar aufgehängt ist und die Führungen (3, 4) jeweils das an der Bugklappe (1) angeschlossene Tragelement (5, 6) ein- und ausfahrbar entlang jeweils des jeweils durch die Führungen beschreibbaren zumindest teilweise gekrümmten Verfahrweges (7, 8) führen.

4. Bugklappenanordnung gemäß Anspruch 1 bis 3, **dadurch gekennzeichnet, dass** die Zugelemente (10, 11) biegeschlaff sind.

5. Bugklappenanordnung gemäß einem der Ansprüche 1 bis 4, **dadurch gekennzeichnet, dass** die Zugelemente (10, 11) als Bowdenzüge (13) ausgeführt sind.

6. Bugklappenanordnung gemäß einem der Ansprüche 1 bis 5, **dadurch gekennzeichnet, dass** die Zugelemente (10, 11) als Riemen, insbesondere Zahnriemen (14) ausgeführt sind, die zu ihrer Synchronisierung jeweils in einem mechanischen Eingriff mit einer gemeinsamen, um eine Drehachse umlaufenden Welle (15) stehen.

7. Bugklappenanordnung gemäß Anspruch 6, **dadurch gekennzeichnet, dass** die Welle (15) sich quer zur Verschieberichtung der Bugklappe (1) erstreckt und je Zahnriemen (14) ein Zahnrad (16) trägt oder ausbildet, mit welchem jeweils ein Zahnriemen (14) in kämmendem Eingriff steht.

8. Bugklappenanordnung gemäß einem der Ansprüche 1 bis 7, **dadurch gekennzeichnet, dass** die Führungen (3, 4) als Gleitlager ausgeführt sind.

9. Bugklappenanordnung gemäß einem der Ansprüche 1 bis 8, **dadurch gekennzeichnet, dass** die Tragelemente (5, 6) als Stangen ausgeführt sind, welche von den Führungen (3, 4) in Umfangsrichtung teilweise oder vollständig umschlossen werden.

10. Bugklappenanordnung gemäß einem der Ansprüche 1 bis 9, **dadurch gekennzeichnet, dass** wenigstens ein Aktuator zum Verschieben der Bugklappe (1) vorgesehen ist, der insbesondere zugleich eine der Führungen (3, 4) und eines der Tragelemente (5, 6) ausbildet.

11. Bugklappenanordnung gemäß einem der Ansprüche 1 bis 10, **dadurch gekennzeichnet, dass** mehrere Bugklappen (1) mit jeweils einer entsprechenden Synchronisationseinrichtung (9) vorgesehen sind.

12. Bugklappenanordnung gemäß einem der Ansprüche 1 bis 11, **dadurch gekennzeichnet, dass** ferner wenigstens eine verschwenkbare Bugklappe (17) vorgesehen ist.

## Claims

1. Front flap assembly for a rail-bound vehicle; having at least one front flap (1) which is suspended so as to be displaceable between a retracted position and a deployed position; having at least two guides (3, 4) which hold the front flap (1) and guide in each case one support element (5, 6), connected to the front flap (1), so as to be retractable and deployable along in each case one displacement path (7, 8) and which are mutually positioned so as to be spaced apart transversely to a displacement direction of the front flap (1); wherein a synchronization installation (9) which engages on the support elements (5, 6) and/or the front flap (1) in such a manner that the displacement paths (7, 8) are synchronized is provided, **characterized in that** the synchronization installation (9) per guide (3, 4) has at least one traction element (10, 11) which is connected to a traction connector (12) on a support element (5, 6), or in the region of the respective support element (5, 6) is connected to the front flap (1), on the one hand, and, on the other hand, is at least indirectly connected to the respective other support element (5, 6) in such a manner that said traction element (10, 11), when retracting the respective other support element (5, 6), exerts on the traction connector (12) a tensile force that synchronizes the displacement paths (7, 8) .

2. Front flap assembly according to Claim 1, **characterized in that** the front flap (1) is suspended so as to be displaceable between the retracted position and the deployed position in a purely translatory manner, and the guides (3, 4) guide in each case the support element (5, 6), connected to the front flap (1), so as to be retractable and deployable in a translatory manner in each case along the respective displacement path (7, 8) that is able to be described by the guides.

3. Front flap assembly according to Claim 1, **characterized in that** the front flap (1) is suspended so as to be displaceable between the retracted position and the deployed position along an at least partially curved displacement path, and the guides (3, 4) guide in each case the support element (5, 6), connected to the front flap (1), so as to be retractable and deployable in each case along the respective, at least partially curved displacement path (7, 8) that is able to be described by the guides.

4. Front flap assembly according to Claims 1 to 3, **characterized in that** the traction elements (10, 11) are limp.

5. Front flap assembly according to one of Claims 1 to 4, **characterized in that** the traction elements (10, 11) are embodied as Bowden cables (13).

6. Front flap assembly according to one of Claims 1 to 5, **characterized in that** the traction elements (10, 11) are embodied as belts, in particular toothed belts (14), which for synchronization thereof each mechanically engage in a common shaft (15) revolving about a rotation axis.

7. Front flap assembly according to Claim 6, **characterized in that** the shaft (15) extends transversely to the displacement direction of the front flap (1) and per toothed belt (14) supports or configures one gearwheel (16), each of the latter meshing with one toothed belt (14).

8. Front flap assembly according to one of Claims 1 to 7, **characterized in that** the guides (3, 4) are embodied as friction bearings.

9. Front flap assembly according to one of Claims 1 to 8, **characterized in that** the support elements (5, 6) are embodied as rods which in the circumferential direction are partially or completely enclosed by the guides (3, 4).

10. Front flap assembly according to one of Claims 1 to 9, **characterized in that** at least one actuator for displacing the front flap (1) is provided, said actuator in particular simultaneously configuring one of the guides (3, 4) and one of the support elements (5, 6).

11. Front flap assembly according to one of Claims 1 to 10, **characterized in that** a plurality of front flaps (1) having in each case one corresponding synchronization installation (9) are provided.

12. Front flap assembly according to one of Claims 1 to 11, **characterized in that** furthermore at least one pivotable front flap (17) is provided.

## Revendications

1. Agencement de volet avant pour un véhicule ferroviaire ;
comprenant au moins un volet avant (1), qui est suspendu de manière coulissante entre une position rétractée et une position déployée ;
comprenant au moins deux guides (3, 4) maintenant le volet avant (1), qui guident respectivement un élément porteur (5, 6) raccordé au volet avant (1) de manière à ce qu'il puisse être rétracté et déployé le long d'un trajet de déplacement respectif (7, 8) et qui sont positionnés à distance l'un de l'autre transversalement à une direction de coulissement du volet avant (1) ;
un dispositif de synchronisation (9) étant prévu, qui agit sur les éléments porteurs (5, 6) et/ou sur le volet avant (1) de telle sorte que les trajets de déplacement (7, 8) sont synchronisés, **caractérisé en ce que** le dispositif de synchronisation (9) présente au moins un élément de traction (10, 11) par guide (3, 4), qui est d'une part raccordé à un raccordement de traction (12) sur un élément porteur (5, 6) ou dans la zone de l'élément porteur respectif (5, 6) sur le volet avant (1) et qui est d'autre part raccordé au moins indirectement à l'autre élément porteur respectif (5, 6) de telle sorte qu'il exerce une force de traction sur le raccordement de traction (12) synchronisant les trajets de déplacement (7, 8) lors de la rétraction de l'autre élément porteur respectif (5, 6).

2. Agencement de volet avant selon la revendication 1, **caractérisé en ce que** le volet avant (1) est suspendu de manière coulissante en translation pure entre la position rétractée et la position déployée, et les guides (3, 4) guident respectivement l'élément porteur (5, 6) raccordé au volet avant (1) de manière à ce qu'il puisse être rétracté et déployé en translation le long du trajet de déplacement respectif (7, 8) pouvant être décrit par les guides respectifs.

3. Agencement de volet avant selon la revendication 1, **caractérisé en ce que** le volet avant (1) est suspendu de manière coulissante entre la position rétractée et la position déployée le long d'un trajet de déplacement au moins partiellement courbé et les guides (3, 4) guident respectivement l'élément porteur (5, 6) raccordé au volet avant (1) de manière à ce qu'il puisse être rétracté et déployé le long du trajet de déplacement au moins partiellement courbé respectif (7, 8) pouvant être décrit par les guides respectifs.

4. Agencement de volet avant selon les revendications 1 à 3, **caractérisé en ce que** les éléments de traction (10, 11) sont mous en flexion.

5. Agencement de volet avant selon l'une quelconque des revendications 1 à 4, **caractérisé en ce que** les éléments de traction (10, 11) sont réalisés sous forme de câbles Bowden (13).

6. Agencement de volet avant selon l'une quelconque des revendications 1 à 5, **caractérisé en ce que** les éléments de traction (10, 11) sont réalisés sous forme de courroies, notamment de courroies dentées (14), qui, pour leur synchronisation, sont respectivement en prise mécanique avec un arbre commun (15) tournant autour d'un axe de rotation.

7. Agencement de volet avant selon la revendication 6, **caractérisé en ce que** l'arbre (15) s'étend transversalement à la direction de coulissement du volet avant (1) et porte ou forme, pour chaque courroie dentée (14), une roue dentée (16) avec laquelle une courroie dentée (14) est respectivement en prise par engrènement.

8. Agencement de volet avant selon l'une quelconque des revendications 1 à 7, **caractérisé en ce que** les guides (3, 4) sont réalisés sous forme de paliers lisses.

9. Agencement de volet avant selon l'une quelconque des revendications 1 à 8, **caractérisé en ce que** les éléments porteur (5, 6) sont réalisés sous forme de tiges qui sont partiellement ou totalement entourées par les guides (3, 4) dans la direction circonférentielle.

10. Agencement de volet avant selon l'une quelconque des revendications 1 à 9, **caractérisé en ce qu'**au moins un actionneur est prévu pour faire coulisser le volet avant (1), qui forme notamment simultanément l'un des guides (3, 4) et l'un des éléments porteurs (5, 6).

11. Agencement de volet avant selon l'une quelconque des revendications 1 à 10, **caractérisé en ce que** plusieurs volets avant (1) sont prévus, chacun avec un dispositif de synchronisation correspondant (9).

12. Agencement de volet avant selon l'une quelconque des revendications 1 à 11, **caractérisé en ce qu'**au moins un volet avant pivotant (17) est en outre prévu.
